(19)

Europäisches Patentamt

European Patent Office

Office européen des brevets

(11) **EP 1 426 659 B1**

(12) **EUROPEAN PATENT SPECIFICATION**

(45) Date of publication and mention
of the grant of the patent:
**17.12.2008 Bulletin 2008/51**

(21) Application number: **01981207.2**

(22) Date of filing: **20.07.2001**

(51) Int Cl.:
***F16H 25/06*** *(2006.01)*

(86) International application number:
**PCT/RU2001/000297**

(87) International publication number:
**WO 2003/008841 (30.01.2003 Gazette 2003/05)**

(54) **"GEAR-BEARING" DIFFERENTIAL SPEED TRANSDUCER**

DIFFERENTIALGESCHWINDIGKEITSWANDLER MIT GETRIEBE

TRANSDUCTEUR DIFFERENTIEL DE VITESSE "REDUCTEUR - ROULEMENT"

(84) Designated Contracting States:
**AT BE CH CY DE DK ES FI FR GB GR IE IT LI LU MC NL PT SE TR**

(43) Date of publication of application:
**09.06.2004 Bulletin 2004/24**

(73) Proprietor: **Novidea Anstalt**
**9490 Vaduz (LI)**

(72) Inventors:
• **SHIBIKO, Anatoly Fedorovich**
**Tomsk, 634057 (RU)**
• **REMNEVA, Tatyana Andreevna**
**Tomsk, 634028 (RU)**

• **STANOVSKOY, Alexandr Viktorovich**
**Tomsk, 634063 (RU)**
• **STANOVSKOY, Viktor, Vladimirovich**
**Tomsk, 634063 (RU)**

(74) Representative: **Mötteli-Mantelli, Novella et al**
**c/o Moetteli & Associés SàRL,**
**St. Leonhardstrasse 4**
**9000 St. Gallen (CH)**

(56) References cited:
**JP-A- 60 129 462      SU-A- 1 019 148**
**SU-A1- 1 216 498      SU-A1- 1 276 869**
**SU-A1- 1 348 586      SU-A2- 1 321 965**
**SU-A2- 1 359 524**

EP 1 426 659 B1

**Description**

BACKGROUND OF THE INVENTION

Field of the Invention

The invention relates to motion transmitting devices with speed conversion and can be used for drives of general use machines and mechanisms. The transducer relates to wave gears provided with intermediate members.

Description of the Related Art

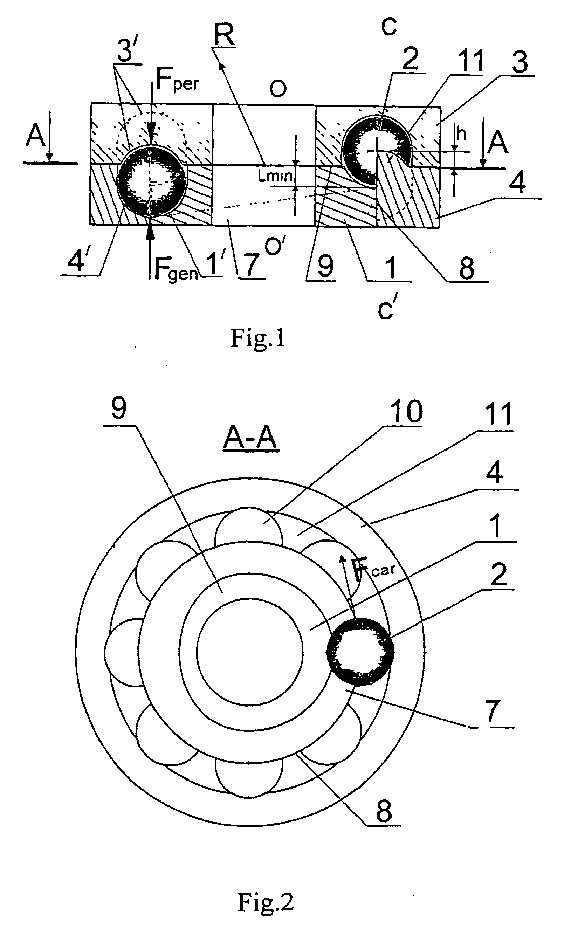

wave tooth gears are known (see "Reducers and motor - reducers of general use engineering industry". Reference book/L.S. Boyko, A.Z. Visockyi and others. - M: Mashinostroyenie, 1984, pp.22-29; RU No 2019760). In general, this gear consists of three basic members including a rigid tooth wheel, flexible tooth wheel and wave generator. The wave tooth gears have a high transmission ratio (up to 1: 350 for one step). Unfortunately, they have low efficiency caused by losses of energy due to deformation of a flexible wheel and to friction between engaged teeth.
Friction between engaged teeth and losses of energy due to deformation of the flexible wheel are eliminated in a wave gear with intermediate members which are rolling elements. Here, a series of rolling elements (balls or rollers) serves as a flexible wheel of a traditional wave gear. Radial wave gears with intermediate rolling members are described in patents RU 2029167, RU 2029168, US 5,989,144. These gears, because the wave generator is a cam, produce a wave of radial motion to a series of balls. Devices in which the wave generator is an eccentric rotating disc or idler located on crankshaft and driven in rotation by the crankshaft, also relate to this type of transducer. The eccentric rotating disc or idler in the devices has a cam side surface formed as a tooth profile with radially oriented teeth (patents US 4,584,904, US 4,643,047, US 5,683,323). The speed transducers, like all mechanisms with eccentric members, have asymmetric loading of the shaft, thereby causing chatter and the increasing deterioration of details of the gear unless a balancing element is applied. In axial wave transducers with intermediate members the wave generator forces a series of rolling members (balls) in an axial direction. Such transducers have some differences in their designs (SU 559052, SU 1025941). Their general disadvantage is that balls during operating periodically lose continuous rolling contact resulting in significant decreasing of operating efficiency.
So-called Sinusoidal Ball Drives are known in the art. Such drives may be related to wave gears with intermediate members (Ignatishchev R.M. «General Information on Sinusoidal Ball Drives», «Bulletin of engineering industry», 1986, No 2, pp.24-28). In the cited article, designs having "two-sinusoidal" and "three-sinusoidal" gears are suggested in which no cam participates in eccentric movement but rather only rolling bodies participate in eccentric movement, which considerably reduces asymmetric loading. A motion transmitting unit formed by «three -sinusoidal" gears (see SU 1276869) includes three members all of which are discs, and at least two of them have a common axis. Any one of the three disks is coupled to a wave generator and this disk is a driving member. Each of these discs is provided with a closed groove bent in a radial direction. All of the grooves are in continuous contact with rolling bodies, i.e. balls. Grooves in two of the discs are formed in its flat end faces; the groove in the intermediate disc is formed at its lateral circular surface. In order to decrease slippage of the ball, the disc coupled with the wave generator is connected to a shaft through a crankshaft, and its groove is in the form of annular groove. This motion transmission unit is not weight balanced because it is more similar to gears with an eccentric cam, and has no general advantage over sinusoidal ball gears.
Upon due investigation of three-sinusoidal gears, it became clear that the balls significantly deviate from their angle positions when simultaneously run over crests and valleys of the grooves, thereby causing a raised impacting engagement which still causes binding (see Ignatishchev R.M. "Three-sinusoidal ball transfer the Bulletin of mechanical engineering", 1987, No 2, pp.13-16). In order to eliminate these disadvantages, an additional thin-walled retainer is inserted between the disks; the thin-walled retainer has radial recesses to fix balls at equal angular spaces from each other while they pass critical points. The retainer's presence displaces points of force which act even more through a line displaced from a straight line passing through a ball center, and thereby worsens the force distribution. Furthermore, in this gear, schematically shown in Figs 1-3 of above patent description (SU 1276869), the balls disengage from the groove in the casing or the driven member intermittently when balls ride the wave in radial motion. At these instants, the balls are free to change their angular positions, and, as result, binding occurs, and the working ability of the gear is problematic.
A motion transmitting unit of "two-sinusoidal" gears includes three members connected in series. Two outer members are provided with cam surfaces in form of grooves which are periodic in the azimuth direction. The intermediate member has recesses for balls and performs the function of both a planet carrier and a retainer simultaneously. One of these members has a cam surface and functions as the wave generator. This principle applies both in radial gears (SU 1019148) and in axial gears (SU 825823). The "two-sinusoidal" kind of gear is typical of the inventions patented by Synkinetics, Inc.(US 5,312,306, US 5,514,045, WO 94/18472, US 5,562,564, US 5,600,699, US 5,722,910, US 5,954,615, US 5,989,145, US 6,039,672, US 6,125,711, and US 5577423).

In radial gears, the periodical endless grooves are made in flat, opposed surfaces of discs and bend in a radial direction, the retainer is positioned between the disks and has radial recesses. Weight unbalance is reduced in such gears and has an effect only in high torque gears because of large ball sizes. An axial scheme of "two-sinusoidal" gears includes three cylinders arranged coaxially one inside the other. Cam surfaces are formed as endless periodic grooves with the axial direction of bending in lateral opposed surfaces of the external and internal members in two end cylinders; and by longitudinal recesses which receive the balls in the intermediate cylinder. In this design, the depth of the periodic grooves and the thickness of the retainer are equal to each other and are 1/3 the diameter of a ball.

The basic concept of above gears is most closely related to the present invention; hence the speed converter according to US 5,577,423 is selected as a model prior art, i.e., an example of related developments in the art. This US 5,577,423 discloses the features of the preamble of claim 1. The speed converter according to patent US 5577423 includes an input driving device functioning as a wave generator, and a transmitting unit made up of three members. Two end members are provided with endless periodical grooves, the third member interposed between the two members has a plurality of through-recesses to receive balls. The balls engage grooves of the two end members. The speed converter is composed of only a few moving parts, is relatively easy to assemble and service, and adaptable to a variety of applications. However, this converter has the general disadvantages mentioned below.

As shown in Fig.8 of patent specification of US 5577423, a reaction force D, acting from the groove of the end member, can be divided into components: force C coinciding with the direction of ball movement along the slot, and force E pressing the ball against the grooves; the reaction of the latter pushes the end discs away from each other. Component C creates useful yield, component E works to increase frictional losses. Points of useful force application with corresponding force directions are shown in Fig.8c of patent specification US 5,312,306. Obviously, the farther the point of ball contact to the groove is from the axis of the ball coinciding with direction of its movement, the less component. C, and the more component E pushes away discs from each other and increases frictional losses. To compensate for these pushing-away forces, a preload is provided to the assembly by means of spring washer 27 in Figs. 2b and 11, in the specification of US Patent No. 5,312,306. Furthermore, the points of force application lie at the edges of grooves which prevents two-point contact of the balls with the grooves. In turn, this causes the increased deterioration of the balls and destruction of grooves at their edges due to the transfer of high torque. As marked in article (Pashkevich M.F. The bulletin of mechanical engineering, 1985, No 7, pp.23-26), the retainer is the weakest part of the sinusoidal ball gear in terms of durability. It is impossible to increase its thickness because the point of force application to the ball is displaced from the ball centre to its edge, and the useful component of the force is decreased.

It is an object of the present invention to provide a speed converter which is simplified in nature but is robust in transmission capability. It is a further object of the present invention to provide a speed converter which is adaptable to a variety applications, self-contained, and composed of a few parts similar to a bearing, which speed converter has no common casing but one of the members becomes immovable upon installation of the speed reducer into place. The invention results in the development of the generalized basic design on which foundation one may build the various embodiments possessing general advantages such as more compactness and a minimum number of parts for its load rating, an optimized load sharing among the torque transmitting members, and also minimum possible useful volume allowing the use of a bearing seal and lubrication which lasts for the life of the device. On the basis of this design, it is possible to develop a mechanism with increased load capacity caused by the two-point contact of the rolling bodies with the grooves. The invention expands a variety of designs and functions of wave gears thereby allowing easy adaption of the converter for any service condition and to build it into a variety of mechanisms. The speed converter according to the invention may be used as both a reducer and a multiplier. Furthermore, the speed reducer according to the invention is able to have either two ore more outputs with a single input, or variable output depending on the ratio of two inputs, and all these functions are provided in a single stage in the torque transmitting unit.

## SUMMARY OF THE INVENTION

In accordance with the present invention, a differential speed transducer based on a wave gear with intermediate rolling bodies, just as the model described above, includes a wave generator and a torque transmitting unit with a series of balls. The torque transmitting unit includes at least three members; each of the members having a groove which is periodical in the azimuth direction. The balls are in constant and simultaneous contact with grooves of all the members. One of the members is coupled to the wave generator. The periodical groove of at least in one of the members is closed and periodical, i.e. it is periodically bending along a closed line. A periodical groove in yet another of the members is formed so as to be interrupted and composed of a plurality of azimuthally mutually spaced slots extending in the same direction as the wave generator forces the balls. In contrast to the model described above, all of the members are made as cages. The cages are so arranged that each of the cages conjugates or mates with two adjacent cages, at least two of the cages conjugate by their intersecting surfaces thus forming a suitable cage. The periodical grooves are located at the intersection of the surfaces. The mutually spaced slots are interlaced with ledges.

In the transmitting unit according to the invention, the direction of force on the balls applied by the cage coupled to the wave generator meets the following condition: A straight line through the ball centre and through both points of ball contact with the opposed closed grooves coincides with the direction of the forcing of the balls by the cage coupled to the wave generator. Therefore, the straight line coincides with the direction of bending of the periodical groove. As a result, each of forces of the ball to the walls of closed grooves has only one component providing useful yield. This condition is not meet in the designs of the prior art. The alignment of the mutually spaced slots with the ledges is essential to ensuring that the balls centre are never beyond the scope of the appropriate grooves during wave movements. An amplitude of bending the closed groove in this arrangement is less than a ball radius: otherwise the ball cannot continuously have contact with all grooves. All of the cages conjugate with each other around of series of balls and form enclosures for balls by their grooves.

The presence in the arrangement of the transmitting unit according the invention of more than three members increases the functional capabilities of the speed converter. In another embodiment of the invention, the transmitting unit includes four cages. In this embodiment, one of the cages may have the plurality of azimuthally mutually spaced slots, the rest of the cages may be provided with closed periodical grooves. The gear thus acts according to the principle of a "three-sinusoidal" gear, in which the cage with the plurality of azimuthally mutually spaced slots acts as unloaded retainer. In the transmitting units with more cages and additional members, different gear ratios may be obtained.

In still another form of invention, a transmitting unit having four cages is preferred. Therein, a plurality of azimuthally mutually spaced slots are provided in two cages disposed about a series of balls and mechanically connected to each other. Then, closed periodical grooves in the rest of the cages are made with a direction of bending coinciding with a line passing from one to another of the remaining cages through the ball centre. The speed transducer with such a torque transmitting unit is intended for the transfer of higher torques without increase in size.

In further embodiments using axial wave movement of balls, the periodic groove in the cage coupled with the wave generator is made in the form of an annular groove inclined to an axis of rotation (or, alternatively, a groove with a varying depth). The inclination is limited by the fact that the distance along an axis between the opposite sides of the annular groove (the swing of the groove) should be less than radius of a ball in order that all of the balls be in simultaneous and continuous contact with all of the grooves. The axial overall dimensions of the torque transmitting unit are not increased in comparison with the model prior art which uses radial movement of the balls, but using wave movement of the balls along an axis provides a balanced system of balls about the axis. The closed periodic grooves in this construction are made so that their generatrixes lie on an imaginary spherical surface with the centre of the sphere lying on the axis of the torque transmitting unit. In this case, the inclined annular groove has a varying depth and width, both depending on the angle of inclination, but its generatrix is a circle. In such a torque transmitting unit, the balls move uniformly without variable acceleration, thereby allowing for the transfer of higher torque and to reliably operate at high speeds.

In an alternative arrangement, the closed periodic groove in the cage coupled with the wave generator is inclined and eccentric relative to the axis of the torque transmitting unit. In this arrangement, movement of balls is a combination of radial and axial movements. This embodiment preferably is composed of four cages, the closed periodical grooves are located in cages lying in a diagonal of an axial section opposite to the ball, and the two remaining cages are located in other diagonal and have the plurality of azimuthally mutually spaced slots. The maximal working load applies to the bottoms of the grooves, therefore this embodiment provides two-point ball contact with the closed periodical grooves, and raises output capability of the torque transmission unit while all other things remain equal.

In yet another embodiment of the invention, the cage coupled with the wave generator is arranged to either enclose other cages or be enclosed by them, the closed periodical groove in this cage is formed in its lateral surface, and it forces the balls along the axis of the torque transmitting unit in an axial direction. In this design, all of the closed periodical grooves are made with their generatrixes lying in an imaginary spherical surface which has a centre that is along the axis of the transmitting unit.

In yet another embodiment, the conjugated coaxial surfaces of the cages are made in the form of the spherical zones, the cage coupled with the wave generator is adapted to create step-by-step movement relative to the centre of the sphere. The embodiment provides a converter with less ball slippage. In this embodiment, the wave generator causes a precession or marching of the cage coupled with it. The groove in the lateral surface of the cage coupled to the wave generator is made in the form of closed straight annular groove. This embodiment provides a torque transmitting unit with axial wave movement of balls, wherein the movement is caused by a precession of the cage coupled to the wave generator. In order to extend the range of gear ratios, the periodic groove in the lateral surface of the cage coupled to the wave generator is provided in the form of a closed groove zigzag in axial direction, in another embodiment.

In another embodiment of invention, the wave generator is provided causing a precession of the cage coupled with it, which wave generator is suited perfectly to the embodiment of a converter in the form of bearing. The wave generator includes a shaft formed of an additional cage coaxial with the torque transmitting unit, the additional cage is arranged opposite to the grooved surface of the marching cage. A ring recess and a ring lug are made so as to mate with each other at the conjugated surfaces of the additional cage and of the marching cage coupled to the wave generator, the ring recess and ring lug are arranged so that two balls are located diametrically opposite one another between walls of the recess and the lug, at the opposite sides of the lug.

In the next embodiment, the groove in the cage coupled with the wave generator is made as a plurality of semispherical mutually spaced slots located in a ring insert, which ring insert is freely set in the annular groove, the annular groove being cut in the lateral surface of the cage and inclined to the axis of transmitting unit. In this embodiment, all of the conjugated surfaces are made in the form of spherical surfaces. For convenience of assembly, the ring insert is formed by separate segments.

BRIEF DESCRIPTION OF DRAWINGS

In the following description, reference will be made to the accompanying drawings. It should be noted that the invention is not limited to the embodiments described herein.

Figs.1, 3, 4, 5, 6 and 12 are schematic representations of various configurations of the torque transmitting unit.

Fig.2 is a cross-section along the line A-A of transmitting unit shown in Fig.1.

Fig.7 illustrates the cage which serves as a planet carrier in configuration shown on Fig.6, and a cross-section along the line D-D this cage.

Fig.8 illustrates the cage having an additional output as compared to the configuration of Fig.6

Fig.13 schematically illustrates the transmitting unit with a marching cage and with axial motion of the balls.

Figs.14 and 15 show variants of a design of the transducer with transmitting units which differ only in the design of the wave generator.

Figs.16 and 17 show the variants of a design of converters having a ring insert.

Fig.18 is the perspective view of a ring insert.

BEST MODE FOR CARRYING OUT THE INVENTION

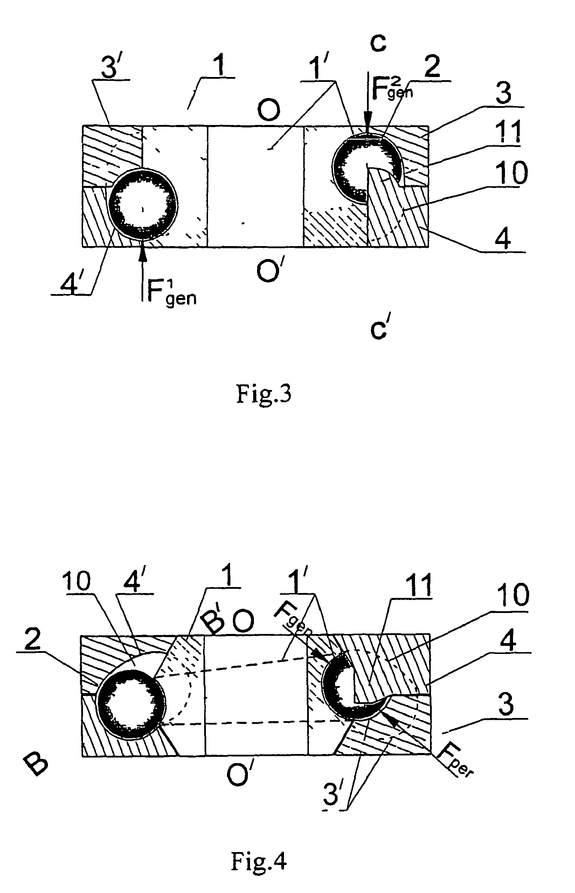

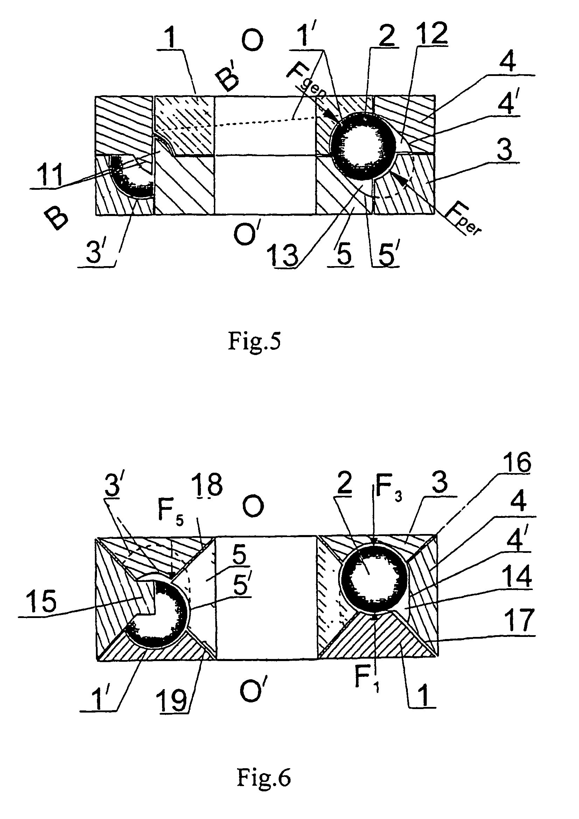

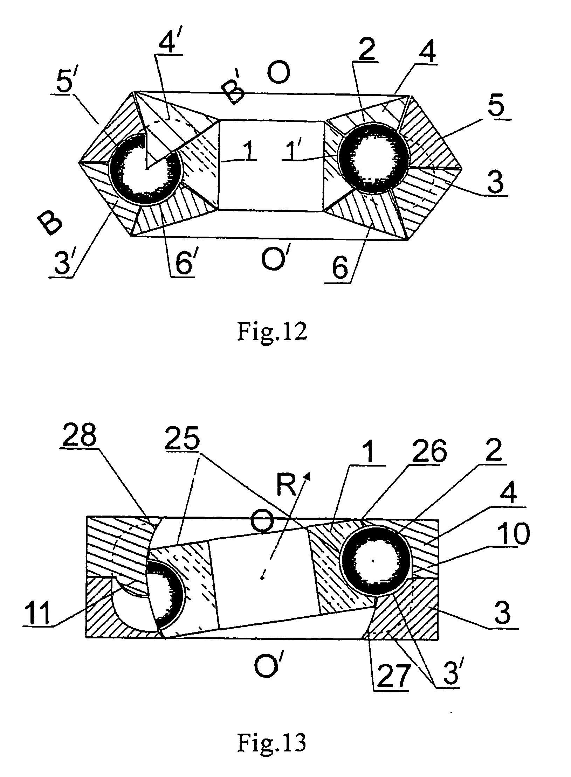

The transmitting units shown in Figs.1, 3 and 4 are composed of three cages; the transmitting units in Figs.5 and 6 are composed of four cages, with a different relative positioning of conjugated surfaces; and in Fig.12, the transmitting unit is composed of five cages. In all figures, the cage coupled with the wave generator is designated by 1, rolling bodies such as balls are designated by 2, and other cages of the transmitting unit are designated by 3, 4, 5 and 6. The cages are arranged relative to each other in such a way that each of the cages conjugates with two adjacent ones (cage 1 in Figs.1, 3, 4 conjugates with cages 3 and 4, and in Figs. 5 and 6 , cage 1 conjugates with cages 4 and 5). Thereto at least two of the cages conjugate by their intersecting surfaces (cages 1 and 4 in Fig.1, cages 3 and 4 in Fig.3; and all cages in the remaining figures). Thus, all cages conjugate with each other around of one circle. In line with this circle, periodic grooves designated accordingly by reference numerals 1', 3', 4', 5, 6' for the balls 2 are made to correspond with cages 1, 3, 4, 5 and 6. The grooves are disposed in conjunction with the intersecting surfaces and have different directions of bending in the different embodiments of the invention. The direction of bending of all of the closed periodic grooves in any one given embodiment is specific to that embodiment and corresponds to a direction in which the balls are forced by the cage coupled to the wave generator. Grooves 1', 3', 6' are closed in all of the figures. Groove 4' and groove 5' in Figs 5 and 6 are formed by a plurality of azimuthally mutually spaced slots extended in the direction of force applied to the balls by the cage coupled to the wave generator.

In Figs.1, 3 and 6, the torque transmitting units are shown in which the bending of grooves and the movement of balls takes place along an axial direction (along axis 00').

In the transmitting units of Figs. 4, 5, and 12, grooves bend along a radial-axial direction, i.e. the periodical generatrix of grooves 1', 3', 5', and 6' is closed, zigzagging in an axial direction, which lies on an imaginary conical surface with cone generatrix BB'.

The periodical groove 1' in the cage 1 (Figs. 1 and 2) is a closed inclined groove 7 (or groove with varying depth) located in the point of the interfacing of lateral surface 8 and end face 9 of the cage 1. This groove 7 contains one period. The generatrix of the groove 7 lies on the spherical surface of radius R. In this case, the centers of balls 2 lie in a circle, which circle enables a marching relative to the centre of sphere, and in operation, the balls make only axial and angular movements. If the generatrix of the groove 7 lies upon a cylindrical surface with its generatrix CC', then the motion path of the balls is deformed to an ellipse, resulting in periodic radial acceleration of the balls, causing stepping and limiting the transmitted torque. The imaginary spherical surface can be replaced with an approximately cylindrical surface only if the amplitude of a ball wave movement is much less than the radius R. In the invention, this condition is met at r << R because of the fact that the amplitude of ball wave movement must not exceed the ball radius r, otherwise the ball will disengage one or more of the cages. The periodical groove 3' in the cage 3 is a closed periodical groove formed in the end face of the cage 3 and has a number of periods equal to nk (where the n is integer, and k is a number of balls).

The periodical generatrix of groove 3', being in this case at the centerline of the groove, also lies on a spherical surface of radius R, the groove 3' is comprised of waves extending in an axial direction. Provided that the above conditions are met, the imaginary spherical surface can be replaced with a cylindrical surface with generatrix CC', approximately. The periodic groove 3' may be formed as a periodic displacement of an annular slot in the axial direction. The value of this displacement (or amplitude of a periodic groove) should not exceed a ball radius so that the ball is in simultaneous contact with all three grooves, i.e. the distance between maximal depth of groove 1' and top of the groove 3' is equal to the diameter of a ball 2. The periodic groove 4' in the cage 4 represents a plurality of azimuthally mutually spaced slots 10 alternating with ledges 11, which ledges are also located in the point of intersection of the lateral surface and end face of the cage 4. The slots are extended in the axial direction and have the depth which corresponds to the maximum depth of the groove 7; the semicircular shape of the slots is adapted to the ball 2. The number of slots 10 is equal to the number of balls 2. This cage 4 with slots 10 serves both as a planet carrier and a retainer, i.e. it fixes the mutual angular positioning of the balls and carries a torque from a series of balls which act as a single unit. The ledges 11 are intended for holding the balls 2 in extreme axial positions, i.e. positions of minimal depth of the groove 7 (in Fig. 1, this position is on the right). The height h of the ledges 11 above the end face of a cage 4 is determined by the minimal depth lmin of the groove 7, and is h = r - lmin, where r is the ball radius. At that height of the ledge 11, the ball centre never goes beyond the limits of the cage 4. In Figs. 1 and 2, the forces applied to the ball 2 from the cages are shown. Force Fgen from cage 1 and reaction force Fper from the periodic groove 3' in the cage 3 are directed along the line passing through the centre of a ball 2, and coinciding with the direction of ball wave movement, therefore each of the forces have only one component which creates a useful yield. By Fcar, a tangential force is shown from the side of the ball against the cage 4, which cage serves as planet carrier-retainer. This force Fcar is applied to an edge of a slot 10 (or to edge of ledge 11 in the other ball positions) and is directed along a tangent to the cage 4 and creates a torque. If the cage 1 coupled to the wave generator is connected to the drive shaft, and the retainer 4 is fixed, then the cage 3 is the driven member. If the cage 3 is fixed to the housing, the cage of the retainer 4 having slots 10, is the driven member. It is necessary to note that the groove 1' at the cage 1 may be formed as a multiperiodic groove. In this case, positions and the balance of forces will not change, and only the gear ratio will change.

The embodiment of the torque transmitting unit shown in Fig. 3 is different from above only in that the periodic groove 1' is formed as an inclined annular groove in an external lateral surface of a cage 1, and the closed periodic groove 3' is located at the point of intersection of the internal lateral surface and end face of the cage 3. Due to this embodiment of the cage 1, a power transmits to a ball in both half-cycles of the wave generator (force Fgen1 acts during the first half-cycle and Fgen2 acts during the second half-cycle).

The torque transmitting unit shown in Fig. 4 has three cages 1, 3, 4 conjugated by their intersecting surfaces, and in such unit, the periodic grooves are positioned at the locus of intersection of the two surfaces of each of the cages. The periodic groove 1' in the cage 1 is inclined and the eccentric groove is placed along the locus of intersecting surfaces of the cage 1. The generatrix of periodically formed groove 3' lies on a surface of an imaginary cone with cone generator BB', and this groove 3' has crests and valleys located in a radial-axial direction, i.e. ball 2 reciprocates along line BB'. The periodic groove of the cage 4, serving as a planet carrier-retainer, is interrupted and represents a plurality of slots 10 mutually spaced along the circle, which slots are elongated in the direction of BB' and alternated with ledges 11. The mutual positioning of cages 1 and 3, and also the direction of bending of their grooves allow the application of forces Fgen and Fper at some distance away from the edges of the grooves, thereby providing for two-point ball contact at all of the grooves.

Embodiments of the torque transmitting unit composed of four members are shown in Figs. 5 and 6.

In the embodiment of Fig. 5, a periodic groove 1' in a cage 1 is located at the locus of intersection of the end face and the lateral surfaces of this cage and is made in the form of annular groove being eccentric and inclined relative to axis OO' of the unit. The periodic generatrix of the closed periodic groove 3' lies on an imaginary conical surface with the generatrix BB', so both crests and valleys are directed along line BB' in the groove 3'. The periodic grooves in cages 4 and 5 are interrupted in the form of a plurality of mutually spaced slots 12 and 13, spaced in the circumferential direction, elongated in the direction BB' and alternating with ledges 11. Cages 4 and 5 are mechanically connected with each other and together serve as a carrier-retainer for the torque transmitting unit which transfers higher torque. The forces Fgen and Fper apply to grooves 1' and 3' and pass through the centrelines of these grooves thereby enabling two-point ball contact with the grooves. A power transmission force Fcar appling to the carrier-retainer (cages 4 and 5) also may be increased, because it is shared by two forces acting on cages 4 and 5, given that balls 2 cooperate with the slots 12 and 13. Ledges 11 between both slots 12 and 13 prevent the ball centre from extending beyond slots 12 and 13.

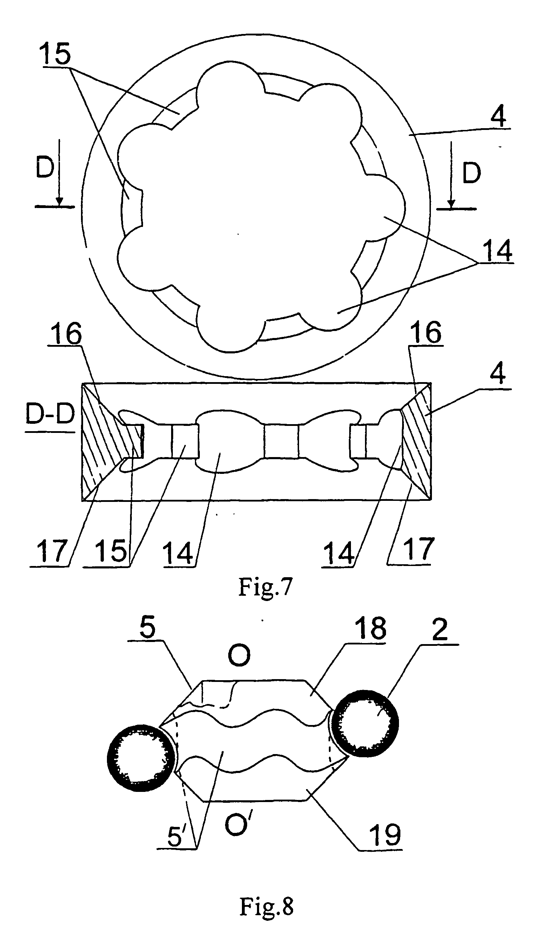

All of cages of the transmitting unit in Fig. 6 have triangular cross sections. This unit is developed for axial movement of the balls, whereby the balls balance is improved, and the required grooves are simpler to manufacture. For example, the groove in cage 1 is an annular groove of variable depth and is formed along the locus of the intersection of conjugated surfaces 17 and 19 of the cage 1. The periodic groove 3' is a closed annular groove formed in the locus of intersecting surfaces 16 and 18 of cage 3. Fig.7 shows the general view of cage 4 and a sectional view, taken along line D-D, of the interrupted groove 4'. The interrupted groove 4' represents a plurality of slots 14 elongated in an axial direction and mutually spaced apart in a circle of intersection of surfaces 16 and 17 of the cage 4. Slots 14 alternate with the ledges 15 and are intended for holding balls 2 in their extreme axial positions.

If in the arrangements shown in Figs. 5 and 6, the slots 14 are formed only in the cage 4, and a closed periodical groove 5', similar to the groove 3', but have a differing number of periods, is positioned at cage 5, this results in either a torque transmitting unit having one input and two output members capable of different gear ratios, or a transmitting unit with two input members and one summing output. Note that the number of groove periods must meet the following condition:

$$z_3 = nk +/- z_1, \quad z_5 = mk +/- z_1, \qquad\qquad\qquad (1);$$

where n and m are integers; k is the number of balls equal to the number of slots 14 in the cage 4; $z_1$, $z_3$, $z_5$ are accordingly the numbers of periods in the cage 1, cage 3, and cage 5 (see Ignatishchev R.M. "Three-sinusoidal ball transfer --the Bulletin of mechanical engineering", 1987, No 2). The groove 5' is formed along a locus of intersection of surfaces 18 and 19 constituting the cage 5 (see Fig. 8) and is closed and periodically bent in the axial direction.

According to Fig. 6, there is made yet another embodiment of the transmitting unit exhibiting radial wave movement of balls. To this end, cages 1 and 3 of Fig. 6 are switched with cages 4 and 5. However, it will be noted that this transmitting unit is appropriate only in speed transducers for low torque applications, since with the increase of torque, the sizes of the rolling bodies are increased, thereby increasing an imbalance in the torque transmitting unit.

The property of having more than one input or output also exists with torque transmitting units composed of five cages enclosing a series of balls 2 in which their grooves are formed along intersecting surfaces (Fig. 12). Here, a cage 4 has an interrupted periodic groove 4' composed of a plurality of mutually spaced azimuth slots having alternating ledges, (as well as in Fig. 5). The periodic grooves in the other cages are closed. A cage 1 is coupled to the wave generator, and its groove is formed as an eccentric groove which is inclined to the axis. Grooves of all the other cages are periodically bent in the direction BB' along the conical surface.

Thus, according to the invention, in the axial section of the transmitting unit, all cages with grooves are located around balls 2 and are conjugate to each other; their grooves form closures for the balls. The forms of the cross-sections of the cages vary and are governed by two general requirements. The first of these requirements is that all of cages have continuous contact with balls 2, and that an angle between intersecting conjugating surfaces of the cages is defined by the number of cages. The second requirement relates to producability of the cages.

To explain how the above-described devices function, let us consider a torque transmitting unit composed of three cages (e.g., Figs. 1, 3, 4). In this example, cage 1, coupled to the wave generator, is an input member. One of the other cages should be fixedly attached to the housing. It may be cage 3 with closed groove, or cage 4 with an interrupted groove. The choice of which cage should be fixed is made depending on the actual concrete application to a mechanism, to promote convenience in setting-up the transmitting unit. For simplicity, we consider the single-periodic wave with an inclined or eccentric annular groove in the cage 1. Every full revolution of the cage 1 causes each of the balls 2 to make a successive movement per each cycle of reciprocating motion. The direction of this movement relative to the axis of the transmitting unit 00' may vary: parallel to the axis (axial), perpendicular to the axis (radial) or inclined by some angle to the axis (radial-axial). The movements of each of the balls 2 correspond to oscillatory motion of the whole series of balls relative to axis 00'. The oscillatory motion is a marching in an axial gear, plane-parallel orbital motion in a radial gear, and complex motion including the precession or marching and the plane-parallel orbital motion in a radial-axial gear. The balls 2, interacting like cams, with both the periodic groove 3' in cage 3 and with groove made up of slots 10 in cage 4, cause one of the cages 3 or 4 to rotate relative to other by an angle corresponding to one period of the groove 3'. The torque transmission unit of the invention may operate also in differential modes, and for this purpose, one of the cages 3 or 4 is connected with another drive instead of the housing. Then the output speed of rotation depends on input speed ratio and gear ratio. If one of the cages 3 or 4 is free, then the transmitting unit operates as general differential. The transmitting unit in Fig.5 operates similarly to that described above although it is composed of four cages, however, as a matter of fact, it is a three-member transmitting unit because cages 4 and 5 operate as a single member, namely, as a planet carrier-retainer.

To illustrate operation of the transmitting unit composed of four or more cages, we shall consider Fig. 6 as an example. Here, cages 1, 3, and 4 interact like that described above. A cage 5 is provided with a groove 5' in which groove a number of the periods satisfies the equation (1) above, and is not equal to the number of periods in the groove 3'. This cage 5 is the second output of the transmitting unit. Reciprocating balls 2 drive not only cage 3, but also cage 5 and cause its rotation relative to the fixed cage by an angle corresponding to one period of groove 5'. Thus, the possibility exists to use two and more speeds of rotation from one transmitting unit. It is necessary to note that the torque which may transfer to cage 5, is less than torque through cage 3, since the groove 5' operates on the basis of a force distribution approach as compared to the model prior art. (Forces F1 and F3 lie on one straight line through the centre of a ball, and force F5 is displaced from this straight line).

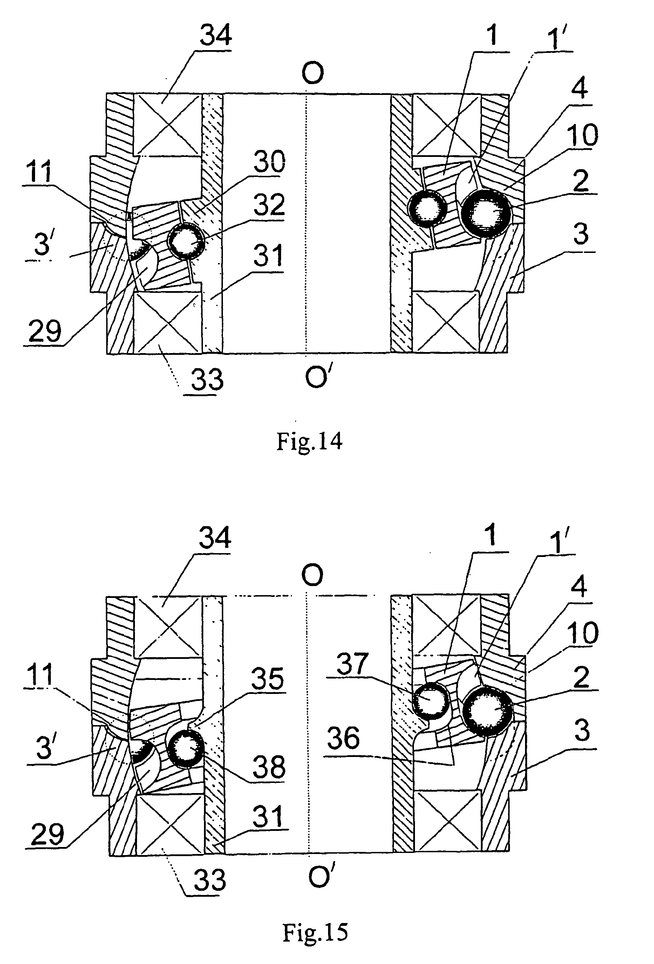

In the above described designs with axial motion of the ball caused by the ball running in inclined annular slot 1' in the cage 1, balls 2 participate in the complex motion including riding in the inclined annular groove 1', and in periodic groove 3', rotation about its own axis, and reciprocal motion in slots of the cage 4. Such movement is accompanied by balls slippage and thus increases wear of grooves and balls, especially at high torques or high speeds. To reduce slippage, a torque transmitting unit with a precession cage (Fig. 13) has been developed. In this unit, a cage 1, coupled to the wave generator, encloses cages 3 and 4. Precession or marching is provided by the wave generator for which concrete and original designs are described below. The closed groove of the cage 1 is made in the form of an annular slot 25. Coaxial conjugated surfaces 26, 27 and 28 of cages 1, 3, and 4 accordingly have the form of spherical zones of radius R equal to the radius of the conjugated coaxial surfaces. Grooves in cages 3 and 4 are the same as those described in the arrangement of Fig. 3. In order to increase the range of possible gear ratios, the wave generator may be made multiwave (Fig. 14). This may be achieved if the groove 1' is formed as a closed periodic bent groove 29.

The cage 1 is supported by bearing 32 located about crank 30 of the crankshaft 31 of the wave generator. The cage 3 is provided with a closed periodic groove 3' bent along the axis of the transmitting unit. The cage 4 is a planet carrier-retainer and has a plurality of slots 10 alternating with ledges 11. The slots 10 extend in the axial direction. Fig. 14 shows one variant for assembling cages 1, 3, and 4. All of the cages are mounted about the shaft 31 of the wave generator. Cages 3 and 4 are mounted about the shaft 31 by bearings 33 and 34 which cover end faces of the transmitting unit.

The wave generator in Fig. 15 includes a shaft 31 arranged coaxially with respect to cages of the transmitting unit opposite periodic groove 1'. In this design, the shaft 31 is located within the interior of the marching cage 1. A ledge 35 and a slot 36 are formed at conjugating lateral surfaces of the shaft 31 and of the cage 1 accordingly. Two balls 37 and 38 are located between the ledge 35 and the slot 36 at the opposite sides of the ledge at diametrically opposite positions. Otherwise, the transmitting unit is the same as in Fig. 14.

The transmitting unit which is capable of reducing slippage operates as follows. Just as in the above described variants, one of the cages is immobilized. Consider the variant wherein the cage 4 with a plurality of slots 10 is immobilized. Driving shaft 31, when it rotates, causes an orbiting of balls 37 and 38 between the ledge 35 and the annular grove 36. With this orbiting of balls, a tilt of the cage 1 causes movement in an azimuth. One complete orbit of the balls corresponds to one wave of precession of the cage 1. Rotation of the shaft 31 is not transferred to the cage 1 because it is .free of the driving shaft through balls 37 and 38 (see Fig. 15) or by bearing 32 (see Fig. 14). The groove 1' of the cage 1 pushes the balls 2 down, causing their axial motion relative to slots 10. Because balls 2 are in slots 10 of the fixed cage 4, they will cause rotation of the groove 29 and, accordingly, of the cage 1, by an angle corresponding to one period of the groove 29. At the same time, the ball 2, interacting with a groove 3' in the cage 3, rotates relative to the cage 1 by angle corresponding to the period of groove 3'. The total movement of the cage 3 relative to the fixed cage 4 is equal either to the sum or to the difference of above movements, and the gear ratio is defined by the ratio of the periods of grooves 29 and 3'. Thus, each of the balls 2 rides in grooves 29 and 3' without slippage, and rotation is transferred through pressure of the ball just as a cam does through the profile cam surfaces of cages 3 and 1. Balls 2 are subjected to a sliding friction only during axial motion in slots 10. The forgoing applies to a reducer in which an input member is the shaft 31 of the wave generator. To obtain a speed multiplier, the input and the output members are changed over.

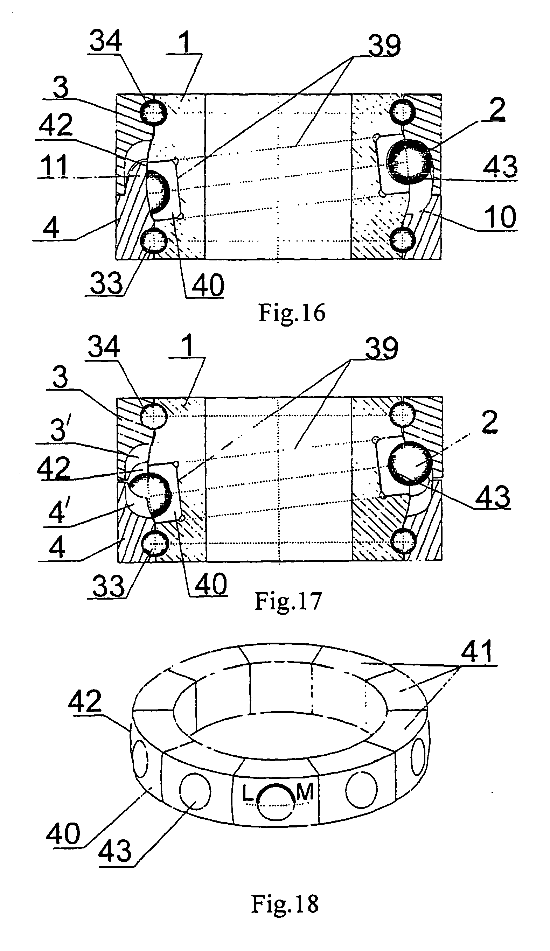

In the transmitting unit shown in Fig. 16, a groove 4' is interrupted and composed of mutually spaced azimuth slots 10 alternated with ledges 11, and a groove 3' is closed and periodically bent in the axial direction. Cage 1, coupled with the wave generator, is located within interior of cages 3 and 4, and is conjugated to them by its lateral surface formed as a spherical zone. The lateral surface of cage 1, facing cages 3 and 4, is provided with annular groove 39 inclined to the axis and having a rectangular cross section. Annular insert 40 is located to freely move in this groove 39; this insert 40 is made up of separate segments 41. The form of the segment of the insert 40 is determined'by assembly requirements. The insert may be made as a monoblock. Then, cage 1 could be as assemblage of parts. The lateral surface 42 of the insert, as well as conjugated surfaces of cages 3 and 4, is spherically bent with the centre of the sphere lying at the transmitting unit axis. The surface of the insert 40 is provided with semispherical slots 43 for balls 2. As in Figs.14 and 15, cages 3 and 4 are mounted about cage 1 by means of bearings 33 and 34. When cage 1 rotates, it causes the insert 40 to push a ball 2, thereby causing its axial wave motion. Thus pressure upon ball 2 results from a portion of surface 43 designated LM in Fig.18 rather than from a point contact. Pressure upon the insert 40 from the cage 1 is distributed also among end faces of the insert. Due to this fact, the transmitting unit is capable of transferring high load without rapid destruction of the balls. To reduce friction of the insert 40 generated with the walls of the groove 39, it is expedient to manufacture the insert 40 of an antifriction material. Otherwise, the operation of the transmitting unit does not differ from that described above.

Thus, various embodiments of the torque transmitting unit have been described, constructed according to the principle of the invention and having certain advantages over the prior art.

Clearly, each of designs described above may be used separately or together and may have multiplicity of application in mechanisms which differ from those described above. In particular, in all figures, the cage coupled to the wave generator is located within interior of other cages. However, in the some cases, it may be more preferable to have an external arrangement of this cage. The choice of particular design is defined by concrete requirements of the gear train to which the transmitting unit is applied.

While the invention has been described with reference to the specific embodiments, it is understood that this description is not to be construed in a limiting sense in as much as various modifications and additions to the specific embodiments may be made by skilled artisans without departing from the scope of the invention.

**Claims**

1.  A differential speed transducer having a wave gear and intermediate rolling bodies (2) comprising

    a wave generator (31), and
    a torque transmitting unit, the torque transmitting unit including at least three coaxial members (1, 3, 4, 5, 6),
    **characterised in that**
    each of the members (1, 3, 4, 5, 6) has a periodic along-azimuth groove (1', 3', 4', 5', 6') continuously interacting with the rolling bodies (2),
    one of the members (1, 3, 4, 5, 6) is coupled to the wave generator (31),
    the periodic along-azimuth groove (1', 3', 6'), at least in one of the members, is closed and periodically bent,
    the periodic along-azimuth groove (4', 5'), at least in another of the members, is made so as to be interrupted and composed of a plurality of mutually azimuthally spaced slots (10) extending in the direction of force applied by the wave generator to the rolling bodies (2),
    each of the members (1, 3, 4, 5, 6) is made in the form of a cage (1, 3, 4, 5, 6),
    the cages are arranged so that each of the cages conjugates with two adjacent cages, and
    at least two of the cages conjugate at their intersecting surfaces to form an appropriate cage,
    the periodic along-azimuth grooves (1', 3', 4', 5', 6') are located at the intersection of these surfaces, and the mutually azimuthally spaced slots (10) comprise interspersed ledges (11).

2.  The differential speed transducer according to claim 1, further **characterised in that** the torque transmitting unit is composed of four cages (3, 4, 5, 6), the mutually azimuthally spaced slots (10) being formed in two of the four cages, which two cages are opposite each other relative to a series of the rolling bodies (2) and are mechanically-coupled to each other; and the closed grooves (1', 3', 6') in the remaining cages are curved in the direction passing from one to other through the ball centre.

3.  The differential speed transducer according to any of claims 1 or 2, further **characterised in that** the closed periodic groove (1', 3', 6') in the cage coupled with the wave generator is made in the form of an annular groove (7) inclined to the axis of the torque transmission unit.

4.  The differential speed transducer according to claim 3, further **characterised in that** the inclined annular groove (7) is eccentric to axis (OO') of the transmitting unit.

5.  The differential speed transducer according to claim of 1, further **characterised in that** the member forming a cage (1) coupled to the wave generator is arranged either to enclose the other of the cages (3, 4, 5, 6), or is enclosed by them, and forces the rolling bodies (2) in an axial direction.

6.  The differential speed transducer according to claim 5, further **characterised in that** the generatrices (BB', CC') of al lof the closed periodic grooves (1', 3', 6') lie on an imaginary spherical surface with the centre thereof lying along an axis of the torque transmitting unit.

7.  The differential speed transducer according to claim6, further **characterised in that** the conjugated coaxial surfaces of all of the members forming cages (1, 3, 4, 5, 6) are made in the form of spherical zones; the member forming a cage (1) coupled with the wave generator being arranged to perform a precession movement relative to the centre of the sphere; and wherein the wave generator is a mechanism causing the precession.

8.  The differential speed transducer according to claim 7, further **characterised in that** the periodic groove in the member forming *a* cage (1) coupled to the wave generator is located at a lateral surface of the cage, and the periodic groove (1') is made in the form of a straight annular groove.

9.  The differential speed transducer according to claim7, further **characterised in that** the periodic groove (1') in the member forming a cage (1) coupled to the wave generator is located at a lateral surface (8) of this member (1), and the periodic groove is formed closed and axially zigzagging.

10. The differential speed transducer according to claims 7 - 9, further **characterised in that** the wave generator, which enables a precession of the member forming *a* cage coupled to it, contains a shaft in the form of an additional cage arranged coaxial to the transmitting unit, and at an opposite side of the groove in the cage enabling a precession movement, an annular recess (43) and an annular lug (40) are made so as to mate at the conjugated surfaces of the additional cage and of the cage coupled with the wave generator, the annular recess (43) and annular lug (40) are arranged so that two rolling bodies (2) are located diametrically opposite one another between walls of the annular slot and the lug on opposite sides of the lug.

11. The differential speed transducer according to claim 6, further **characterised in that** the groove (1') in the member forming *a* cage (1) coupled to the wave generator is composed of a plurality of semispherical mutually spaced recesses (43) located in a ring insert (40), which ring insert is freely set in the annular groove (39) cut in a lateral surface (8) of this member (1) and inclined to the axis (OO') of the torque transmitting unit.

12. The differential speed transducer according to claim 11, further **characterised in that** the ring insert (40) is formed by separate segments (41).

**Patentansprüche**

1. Differential-Geschwindigkeitswandler mit einem Wellengetriebe und Zwischen-Rollkörpern (2), welcher aufweist

   einen Wellengenerator (31); und
   eine Drehmoment-Übertragungseinheit, wobei die Drehmoment-Übertragungseinheit mindestens drei koaxiale Glieder (1, 3, 4, 5, 6) enthält,
   **dadurch gekennzeichnet, dass**
   jedes der Glieder (1, 3, 4, 5, 6) eine entlang der Azimut-Richtung verlaufende periodische Rille (1', 3', 4', 5', 6') hat, welche mit den Rollkörpern (2) kontinuierlich wechselwirkt;
   eines der Glieder (1, 3, 4, 5, 6) mit dem Wellengenerator (31) gekoppelt ist;
   die entlang der Azimut-Richtung verlaufende periodische Rille (1', 3', 6') in mindestens einem der Glieder geschlossen und periodisch gebogen ist;
   die entlang der Azimut-Richtung verlaufende periodische Rille (4', 5') in mindestens einem anderen der Glieder derart ausgestaltet ist, dass sie unterbrochen ist und aus einer Vielzahl voneinander azimutal beabstandeter Schlitze (10) gebildet ist, welche sich in der Richtung der Kraft erstrecken, die durch den Wellengenerator an die Rollkörper (2) angelegt wird;
   jedes der Glieder (1, 3, 4, 5, 6) in Form eines Käfigs (1, 3, 4, 5, 6) gefertigt ist;
   die Käfige derart angeordnet sind, dass jeder der Käfige zu zwei angrenzenden Käfigen konjugiert ist; und mindestens zwei der Käfige bei ihren Schnittflächen konjugiert sind, um einen geeigneten Käfig zu bilden;
   die entlang der Azimut-Richtung verlaufenden periodischen Rillen (1', 3', 4', 5', 6') sich beim Schnitt dieser Flächen befinden, und die voneinander azimutal beabstandeten Schlitze (10) mit Vorsprüngen (11) durchsetzt sind.

2. Differential-Geschwindigkeitswandler nach Anspruch 1, **dadurch gekennzeichnet, dass** die Drehmoment-Übertragungseinheit aus vier Käfigen (3, 4, 5, 6) besteht, wobei die voneinander azimutal beabstandeten Schlitze (10) in zwei Käfigen der vier Käfige gebildet sind, wobei diese beiden Käfige bezüglich einer Serie der Rollkörper (2) zueinander gegenüberliegend sind und miteinander mechanisch gekoppelt sind; und dass die geschlossenen Rillen (1',3',6') in den restlichen Käfigen in der Richtung gekrümmt sind, die von einem zum anderen durch die Rollkörper-Mitte verläuft.

3. Differential-Geschwindigkeitswandler nach einem der Ansprüche 1 oder 2, **dadurch gekennzeichnet, dass** die mit dem Wellengenerator gekoppelte geschlossene periodische Rille (1', 3', 6') in dem Käfig in Form einer ringförmigen Rille (7) gebildet ist, die zur Achse der Drehmoment-Übertragungseinheit geneigt ist.

4. Differential-Geschwindigkeitswandler nach Anspruch 3, **dadurch gekennzeichnet, dass** die geneigte ringförmige Nut (7) zur Achse (00') der Übertragungseinheit exzentrisch ist.

5. Differential-Geschwindigkeitswandler nach Anspruch 1, **dadurch gekennzeichnet, dass** das Glied, welches einen mit dem Wellengenerator gekoppelten Käfig (1) bildet, so angeordnet ist, dass es entweder den anderen der Käfige (3, 4, 5, 6) enthält oder von diesen eingeschlossen ist, und die Rollkörper (2) in eine axiale Richtung zwingt.

6. Differential-Geschwindigkeitswandler nach Anspruch 5, **dadurch gekennzeichnet, dass** die Erzeugenden (BB', CC') aller geschlossener periodischer Rillen (1', 3', 6') auf einer imaginären Kugeloberfläche liegen, deren Mitte entlang einer Achse der Drehmoment-Übertragungseinheit liegt.

7. Differential-Geschwindigkeitswandler nach Anspruch 6, **dadurch gekennzeichnet, dass** die konjugierten koaxialen Oberflächen aller Glieder, die Käfige (1, 3, 4, 5, 6) bilden, in Form von Kugelzonen gebildet sind; dass das Glied, das einen mit dem Wellengenerator gekoppelten Käfig (1) bildet, so angeordnet ist, dass es eine Päzessionsbewegung bezüglich der Mitte der Kugel durchführt; und dass der Wellengenerator eine die Präzession verursachende Mechanik ist.

8. Differential-Geschwindigkeitswandler nach Anspruch 7, **dadurch gekennzeichnet, dass** die periodische Rille in dem Glied, das einen mit dem Wellengenerator gekoppelten Käfig (1) bildet, sich an einer seitlichen Oberfläche des Käfigs befindet, und dass die periodische Rille (1') in Form einer geraden ringförmigen Rille gebildet ist.

9. Differential-Geschwindigkeitswandler nach Anspruch 7, **dadurch gekennzeichnet, dass** die periodische Rille (1') in dem Glied, das einen mit dem Wellengenerator gekoppelten Käfig (1) bildet, sich an einer seitlichen Oberfläche (8) dieses Glieds (1) befindet, und dass die periodische Rille geschlossen und axial zickzackförmig ausgebildet ist.

10. Differential-Geschwindigkeitswandler nach einem der Ansprüche 7 bis 9, **dadurch gekennzeichnet, dass** der Wellen generator, der eine Präzession des Glieds ermöglicht, das einen mit ihm gekoppelten Käfig bildet, eine Drehwelle in Form eines zusätzlichen Käfigs enthält, der koaxial zu der Übertragungseinheit angeordnet ist; und dass an einer gegenüberliegenden Seite der Rille in dem Käfig, der eine Präzessionsbewegung ermöglicht, eine ringförmige Vertiefung (43) und eine ringförmige Nase (40) derart vorgesehen sind, dass sie an den konjugierten Oberflächen des zusätzlichen Käfigs und des mit dem Wellengenerator gekoppelten Käfigs zueinander passen; dass die die ringförmige Vertiefung (43) und die ringförmige Nase (40) so angeordnet sind, dass sich zwei Rollkörper (2) einander diametral gegenüberliegend zwischen Wänden des ringförmigen Schlitzes und der Nase an entgegengesetzten Seiten der Nase befinden.

11. Differential-Geschwindigkeitswandler nach Anspruch 6, **dadurch gekennzeichnet, dass** die Rille (1') in dem Glied, das einen mit dem Wellengenerator gekoppelten Käfig (1) bildet, aus einer Vielzahl voneinander beabstandeter halbkugelförmiger Vertiefungen (43) besteht, die sich in einem Ringeinsatz (40) befinden, wobei der Ringeinsatz in der ringförmigen Nut (39), die in eine seitliche Oberfläche (8) dieses Glieds (1) geschnitten ist, frei eingesetzt ist und zur Achse (00') der Drehmoment-Übertragungseinheit geneigt ist.

12. Differential-Geschwindigkeitswandler nach Anspruch 11, **dadurch gekennzeichnet, dass** der Ringeinsatz (40) aus gesonderten Segmenten (41) gebildet ist.

## Revendications

1. Transducteur différentiel de vitesse comportant un engrenage ondulatoire et des corps intermédiaires de roulement (2), comprenant:

   un générateur d'ondes (31); et
   une unité de transmission de couple de rotation, ladite unité de transmission de couple de rotation comportant au moins trois membres coaxials (1, 3, 4, 5, 6),
   **caractérisé en ce que**
   chacun des membres (1, 3, 4, 5, 6) a une rainure périodique selon la direction azimutale (1', 3', 4', 5', 6') et en interaction continue avec les corps de roulement (2); l'un des membres (1, 3, 4, 5, 6) est couplé au générateur d'ondes;
   ladite rainure périodique selon la direction azimutale (1', 3', 6') est fermée et courbée périodiquement dans au moins un des membres;
   la rainure périodique selon la direction azimutale (4', 5'), dans au moins un autre desdits membres, est aménagée de manière à ce qu'elle soit interrompue et composée d'une pluralité de fentes (10) espacées de façon azimutale les unes des autres et s'étendant selon la direction de la force appliquée aux corps de roulement (2) par le générateur d'ondes ;
chacun des membres (1, 3, 4, 5, 6) est formé sous forme d'une cage (1, 3, 4, 5, 6); lesdites cages sont agencées de manière à ce que chacune des cages se conjugue à deux cages adjacentes; et
au moins deux desdites cages se conjuguent au niveau de leurs surfaces d'intersection afin de former une cage appropriée;
les rainures périodiques selon la direction azimutale (1 ', 3', 4', 5', 6') se trouvent au niveau de l'intersection desdites surfaces, et les fentes (10) espacées de façon azimutale les unes des autres sont pourvues de saillies (11) réparties dans lesdites fentes.

2. Transducteur différentiel de vitesse selon la revendication 1, **caractérisé en ce que** ladite unité de transmission de couple de rotation est composée de quatre cages (3, 4, 5, 6), lesdites fentes (10) espacées de façon azimutale les unes des autres étant formées dans deux desdites quatre cages, lesdites deux cages s'opposant mutuellement par rapport à une série de corps de roulement (2) et se trouvant en couplage mécanique les uns aux autres; et **en ce que** lesdites rainures fermées (1', 3', 6') dans le reste des cages sont courbées dans la direction qui passe depuis l'un vers l'autre au travers du centre d'un corps de roulement.

3. Transducteur différentiel de vitesse selon l'une quelconque des revendications 1 ou 2, **caractérisé en ce que** ladite rainure périodique fermée (1', 3', 6') couplée audit générateur d'ondes est formée dans ladite cage sous la forme d'une rainure annulaire (7) inclinée à l'axe de ladite unité de transmission de couple de rotation.

4. Transducteur différentiel de vitesse selon la revendication 3, **caractérisé en ce que** la rainure annulaire (7) inclinée est excentrique à l'axe (00') de ladite unité de transmission de couple de rotation.

5. Transducteur différentiel de vitesse selon la revendication 1, **caractérisé en ce que** le membre formant une cage (1) couplée audit générateur d'ondes est agencé de manière à ce que soit il contient l'autre desdites cages (3, 4, 5, 6), soit il est enfermé par ces-derniers, et vient forcer lesdits corps de roulement (2) vers une direction axiale.

6. Transducteur différentiel de vitesse selon la revendication 5, **caractérisé en ce que** les génératrices (BB', CC') de toutes les rainures périodiques fermées (1', 3', 6') se situent sur une surface sphérique imaginaire dont le centre se situe le long d'un axe de ladite unité de transmission de couple de rotation.

7. Transducteur différentiel de vitesse selon la revendication 6, **caractérisé en ce que** les surfaces coaxiales conjuguées de tous les membres formant des cages (1, 3, 4, 5, 6) sont formées sous la forme de zones sphériques; **en ce que** le membre formant une cage (1) couplée audit générateur d'ondes est agencé de manière à ce qu'il fait un mouvement de précession; et **en ce que** ledit générateur d'ondes est un système mécanique provoquant cette précession.

8. Transducteur différentiel de vitesse selon la revendication 7, **caractérisé en ce que** la rainure périodique dans ledit membre formant une cage (1) couplée audit générateur d'ondes se situe au niveau d'une surface latérale de ladite cage, et ladite rainure périodique (1') est réalisée sous la forme d'une rainure annulaire droite.

9. Transducteur différentiel de vitesse selon la revendication 8, **caractérisé en ce que** la rainure périodique (1') dans ledit membre formant une cage (1) couplée audit générateur d'ondes se situe au niveau d'une surface latérale (8) dudit membre (1), et **en ce que** ladite rainure périodique est formée de façon fermée et axialement en zigzag.

10. Transducteur différentiel de vitesse selon l'une quelconque des revendications 7 à 9, **caractérisé en ce que** ledit générateur d'ondes permettant une précession du membre formant une cage couplée à ce-dernier comporte un arbre sous la forme d'une cage supplémentaire agencée de façon coaxiale à ladite unité de transmission; et **en ce que**, au niveau d'un côté opposé de la rainure dans ladite cage permettant un mouvement de précession, un évidement annulaire (43) et un nez annulaire (40) sont prévus de manière à ce que ces-derniers viennent s'épouser au niveau des surfaces conjuguées de ladite cage supplémentaire et de ladite cage couplée audit générateur d'ondes; **en ce que** ledit évidement annulaire (43) et ledit nez annulaire (40) sont prévus de manière à ce que deux corps de roulement (2) se trouvent diamétralement opposés entre des parois de la fente annulaire et ledit nez à des côtés opposés dudit nez.

11. Transducteur différentiel de vitesse selon la revendication 6, **caractérisé en ce que** la rainure (1') dans le membre formant une cage couplée audit générateur d'ondes est composée d'une pluralité d'évidements hémisphériques (43) espacés les uns des autres et situés dans un insert annulaire (40), ledit insert annulaire venant se placer librement dans ladite rainure annulaire (39) coupée dans une surface latérale (8) de ce membre (1) et inclinée à l'axe (00') de ladite unité de transmission de couple de rotation.

12. Transducteur différentiel de vitesse selon la revendication 11, **caractérisé en ce que** ledit insert annulaire (40) est formé par des segments (41) séparés.

Fig.1

Fig.2

Fig.3

Fig.4

Fig.5

Fig.6

Fig.7

Fig.8

Fig.12

Fig.13

Fig.14

Fig.15

Fig.16

Fig.17

Fig.18

**REFERENCES CITED IN THE DESCRIPTION**

**Patent documents cited in the description**

- RU 2019760
- RU 2029167
- RU 2029168
- US 5989144 A
- US 4584904 A
- US 4643047 A
- US 5683323 A
- SU 559052
- SU 1025941
- SU 1276869
- SU 1019148
- SU 825823

- US 5312306 A
- US 5514045 A
- WO 9418472 A
- US 5562564 A
- US 5600699 A
- US 5722910 A
- US 5954615 A
- US 5989145 A
- US 6039672 A
- US 6125711 A
- US 5577423 A

**Non-patent literature cited in the description**

- Reducers and motor - reducers of general use engineering industry. **L.S. BOYKO ; A.Z. VISOCKYI.** M: Mashinostroyenie. 1984, 22-29
- **IGNATISHCHEV R.M.** General Information on Sinusoidal Ball Drives. *Bulletin of engineering industry,* 1986, (2), 24-28

- **IGNATISHCHEV R.M.** *Three-sinusoidal ball transfer the Bulletin of mechanical engineering,* 1987, (2), 13-16
- **PASHKEVICH M.F.** *The bulletin of mechanical engineering,* 1985, (7), 23-26